# EUROPÄISCHE PATENTSCHRIFT

(11) **EP 1 225 070 B1**
(45) Veröffentlichungstag und Bekanntmachung des Hinweises auf die Patenterteilung: **23.11.2005**
(21) Anmeldenummer: 01128692.9
(22) Anmeldetag: 01.12.2001
(51) Int. Cl.: B60H 1/00

(54) **Verfahren und Vorrichtung zur Umluftumschaltung bei einer Klimaanlage in einem Kraftfahrzeug**
Method and device for air circulation switching in vehicle air conditioners
Méthode et dispositif de commutation de la circulation d'air dans un conditionneur d'air de véhicule

(30) Priorität: 19.01.2001 DE 10102215
(43) Veröffentlichungstag der Anmeldung: 24.07.2002
(73) Patentinhaber: Bayerische Motoren Werke Aktiengesellschaft, 80809 München (DE)
(72) Erfinder: Bunzl, Alexander, 80689 München (DE)

(56) Entgegenhaltungen:
- EP-A- 0 857 593
- EP-A- 0 861 747
- DE-A- 19 737 272
- US-A- 4 613 791

## Beschreibung

Die Erfindung betrifft ein Verfahren zur Umluftumschaltung bei einer Klimaanlage in einem Fahrzeug gemäß dem Oberbegriff des Anspruchs 1.

Als Klimaanlage werden vorliegend alle Heiz-, Kühl- und Lüftungsanlagen in einem Fahrzeug bezeichnet, welche sowohl in einem Umluftbetrieb als auch in einem Außenluftbetrieb arbeiten können. Beim Außenluftbetrieb wird Luft von außerhalb eines Fahrzeugs angesaugt und dem Fahrzeuginnenraum zugeführt. Beim Umluftbetrieb stammt die zum Betrieb der Klimaanlage benötigte Luft zumindest im wesentlichen aus dem Innenraum des Fahrzeugs selbst. Diese Luft wird dann in der Klimaanlage erwärmt, gekühlt, gereinigt etc. und wieder dem Innenraum zugeführt. Der Betrieb einer Klimaanlage im Umluftbetrieb ist insbesondere dann gewünscht, wenn eine Außenumgebungsbedingung vorliegt, die nicht über die Klimaanlage in den Fahrzeug-Innenraum transportiert werden soll (z.B. hohe Schadstoffkonzentration).

Zur Umschaltung vom Außenluftbetrieb auf den Umluftbetrieb und umgekehrt ist es bekannt, einen Schalter im Bedienbereich der Klimaanlage vorzusehen, mit dem ein Fahrzeuginsasse manuell die Betriebumstellung herbeiführen kann. Überdies sind auch automatische Umluftsteuerungen bekannt, die beispielsweise über einen Schadstoffsensor geregelt werden. Gemäss einer allgemein bekannten Ausführungsform erfasst ein Sensor die Konzentration oxidierbarer Gase, wie z.B. Kohlenmonoxid oder Kohlenwasserstoffverbindungen in der Umgebungsluft und schaltet dann automatisch von einem Außenluftbetrieb zu einem Umluftbetrieb, wenn vordefinierte Grenzwerte überschritten sind.

Nachteilig hierbei ist jedoch, dass bekannte Sensoren oft nur auf bestimmte Schadstoffe in der Luft reagieren. Insbesondere die Dieselruß-Empfindlichkeit solcher Sensoren ist relativ gering. Zudem wird in bestimmten Betriebssituationen die Detektion von Schadstoffen infolge von Maskierungseffekten erschwert oder verzögert. Aufgrund dieser Effekte kann es vorkommen, dass eine Umschaltung vom Außenluftbetrieb zu einem Umluftbetrieb erst mit einer zeitlichen Verzögerung von mehreren Sekunden erfolgt, wobei in diesem Zeitraum noch "schlechte Luft" in das Fahrzeuginnere transportiert wird. Durch die anschließende Umstellung auf den Umluftbetrieb verbleibt diese Luft im Fahrzeug, was zu einer Belästigung oder Beeinträchtigung der Fahrzeuginsassen führen kann. Diese Effekte treten insbesondere in Tunneln, Tiefgaragen oder sonstigen abgeschotteten Fahrbereichen auf. Da die herkömmlichen Regelungen zudem auf Flankensignale bezüglich der Schadstoffkonzentrationen reagieren, verringert sich die Sensibilität eines Systems bei einer hohen Grundbelastung. Bei einer Fahrt durch einen langen Tunnel oder bei Staus in Tunneln schaltet ein herkömmliches System daher zu früh auf einen Außenluftbetrieb um, was wiederum zu einer Belästigung oder Beeinträchtigung der Fahrzeuginsassen führt.

Ferner ist aus der EP 0 861 747 A2 eine Klimaanlage für den Innenraum eines Kraftfahrzeugs bekannt, die eine Umluft/Außenluft-Verstellvorrichtung aufweist, mittels derer die Klimaanlage entweder im Umluftbetrieb oder im Frischluftbetrieb arbeiten kann. Die Ansteuerung der Verstellvorrichtung erfolgt dabei durch eine Steuereinheit, unter anderem in Abhängigkeit von der vorliegenden Sonneneinstrahlung, als einem Parameter zur Repräsentation des im Fahrzeuginnenraum benötigten Wärme- bzw. Kälteenergiebedarfs.

Aufgabe der vorliegenden Erfindung ist es, ein Verfahren zur Umluftumschaltung bei einer Klimaanlage in einem Fahrzeug anzugeben, mit dem Fahrzeuginsassen auch in abgeschotteten Fahrbereichen möglichst wenig Belästigungen oder Beeinträchtigungen durch eine schlechte Außenluft ausgesetzt sind.

Diese Aufgabe wird durch die in Anspruch 1 genannten Merkmale gelöst.

Ein Grundgedanke der vorliegenden Erfindung ist darin zu finden, dass Helligkeits- und/oder Sonneneinstrahlungs-Informationen zur Steuerung einer Vorrichtung zur Umschaltung von Außenluftbetrieb auf Umluftbetrieb und umgekehrt genutzt werden wobei ein Maß für die Änderung der Helligkeit und/oder der Sonneneinstrahlung ermittelt wird, geprüft wird, ob dieses Maß einen vorgegebenen Wert überschreitet und bei Überschreitung d es Wertes eine Umschaltung zwischen Außenluftbetrieb und Umluftbetrieb erfolgt. Das von Helligkeits- und/oder Sonneneinstrahlungssensoren stammende Signal kann zur Erkennung von Tunnel-, Tiefgarageneinfahrten, etc. dienen und als Ansteuersignal genutzt werden, um bei Tunnel- und Tiefgarageneinfahrten auf Umluftbetrieb oder zurück auf den Außenluftbetrieb zu schalten. Dabei wird der Effekt einer schlagartigen Helligkeitsänderung und damit eines schnellen Flankensignals ausgenutzt.

Bei einer Kombination von Helligkeits- und Sonneneinstrahl-Informationen kann eine Nachterkennung durchgeführt oder eine Fehlinterpretation durch auftretende Schatten ausgeschlossen werden. Beispielsweise liegt bei einem künstlich beleuchteten Umfeld keine solare Einstrahlung vor.

Ferner kann zusätzlich die Schadstoffkonzentration in der Außenluft überwacht werden. Wird nun festgestellt, dass auch über eine bestimmte Zeit nach einer Verminderung der Helligkeit ohne einem Wegfall der Sonneneinstrahlung sich die Außenluftzusammensetzung nicht verschlechtert, so kann nach einer Umschaltung auf den Umluftbetrieb wieder auf den Außenluftbetrieb zurückgeschaltet werden.

Bei einem sprunghaften Anstieg der Helligkeit und/oder der solaren Einstrahlung und einem vorhergehenden Umschaltvorgang auf einen Umluftbetrieb aufgrund einer verminderten Helligkeit oder einer verminderten Sonneneinstrahlung, kann von einem Umluftbetrieb wieder auf den Außenluftbetrieb automatisch zurückgestellt werden.

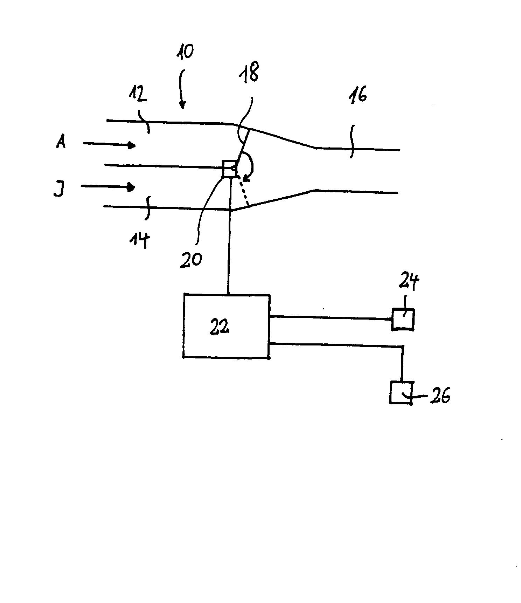

Die vorliegende Erfindung wird nachfolgend anhand eines Ausführungsbeispiels und mit Bezug auf die einzige beiliegende Zeichnung näher erläutert. Die einzige Zeichnung zeigt eine schematische Blockdarstellung einer Ausführungsform einer Vorrichtung zur Umluftschaltung zur Erläuterung der vorliegenden Erfindung.

Ein Fahrzeug (nicht näher dargestellt) weist eine Klimaanlage auf, bei der verschiedene Luftführungskanäle vorgesehen sind. In der dargestellten Figur ist mit dem Bezugszeichen 10 ein Ausschnitt eines solchen Luftführungskanals gezeigt, der Teilluftkanäle 12, 14 und 16 umfasst. Der Teilluftkanal 12 endet bei einer Öffnung (nicht dargestellt), über die Außenluft A angesaugt werden kann und mündet in einen zentralen Luftkanal 16.

Der Teilluftkanal 14 endet bei einer Öffnung (nicht dargestellt) über die Innenraumluft I angesaugt werden kann und mündet ebenfalls in den zentralen Luftkanal 16. Am Ende der beiden Teilluftkanäle 12 und 14 ist eine verschwenkbare Lüftungsklappe 18 verschwenkbar befestigt, die in einer Endstellung den Teilluftführungskanal 12 und in der anderen Endstellung den Teilluftkanal 14 (siehe gestrichelt dargestellte Klappe) verschließen kann, so dass wahlweise die Außenluft A oder die Innenluft I oder ein kombinierter Luftstrom über den zentralen Luftkanal 16 dem Innenraum eines Fahrzeugs zugeführt werden kann.

Im vorliegenden Beispiel ist der Umluftbetrieb eingestellt, da die Lüftungsklappe 18 den Teilluftkanal 12 versperrt. In der gestrichelten Darstellung der Lüftungsklappe 18 würde der Teilluftkanal 14 versperrt werden, so dass der Außenluftbetrieb realisiert ist. Die Verstellung der Lüftungsklappe 18 wird über einen zugeordneten Motor 20 bewirkt, der mit einer Steuereinrichtung 22 verbunden ist und von dieser beaufschlagt wird. Die Steuereinrichtung 22 kann eine Vielzahl von Steuerfunktionen haben. Vorliegend wird jedoch zur besseren Übersichtlichkeit lediglich auf die Umschaltfunktion zwischen Umluftbetrieb und Außenluftbetrieb eingegangen.

Die Steuereinrichtung 22 empfängt u. a. Signale von einem Helligkeitssensor 24 und einem Sonneneinstrahlungssensor 26. Die Lüftungsklappe 18 wird von der Steuereinrichtung 22 u. a. aufgrund der Signale dieser beiden Sensoren 24 und 26 beaufschlagt. Natürlich können auch andere Funktionen, wie die manuelle Umschaltung mittels eines nicht dargestellten Bedienknopfes, realisiert werden.

Nachfolgend wird das mit der dargestellten Vorrichtung umgesetzte Verfahren näher beschrieben.

Beim Einfahren in einen Tunnel erfolgt bei Tag eine schlagartige Änderung der Helligkeit. Das dadurch von dem Helligkeitssensor 24 und dem Sonneneinstrahlsensor 26 generierte Flankensignal wird von der Steuereinrichtung 22 erfasst und ausgewertet. Wird eine Änderung beider Signale festgestellt und liegen die Änderungen jeweils über einem vorgegebenen Wert, so beaufschlagt die Steuereinrichtung 22 den Motor 20 in der Weise, dass von einem etwaig vorher eingestellten Außenluftbetrieb auf einen Umluftbetrieb umgeschaltet wird. Dazu wird die Lüftungsklappe 18 in der Figur nach oben verschwenkt.

Im weiteren Verlauf des Betriebs der Klimaanlage werden dann die Schadstoffkonzentration sowie die Signale der Sensoren 24 und 26 überwacht. Die Schadstoffkonzentration wird mittels eines nicht dargestellten Schadstoffsensors ermittelt. Stellt die Steuereinrichtung 22 fest, dass die Schadstoffkonzentration über einen definierten Zeitraum von beispielsweise 5 Minuten nicht über einen Wert ansteigt, der auch vor dem Umschalten auf den Umluftbetrieb vorlag, so wird wieder auf den Außenluftbetrieb zurückgeschaltet. Wird jedoch eine Erhöhung der Schadstoffkonzentration festgestellt, so wird der Umluftbetrieb beibehalten.

Beim Verlassen des Tunnels wird von der Steuereinrichtung 22 wieder ein schnelles Flankensignal in Richtung einer stark zunehmenden Helligkeit sowie einer stark zunehmenden Sonneneinstrahlung festgestellt. In diesem Fall überprüft sie, ob vorher aufgrund einer verminderten Helligkeit oder einer verminderten Sonneneinstrahlung auf den Umluftbetrieb geschaltet worden ist. Wenn dies der Fall ist, wird wiederum auf den Außenluftbetrieb zurückgeschaltet (vgl. Pfeil in der Fig).

Durch eine entsprechende Kombination von Helligkeits- und Sonneneinstrahlinformationen können auch Störeffekte, wie eine Fahrt im Schatten von Häusern oder Bäumen oder durch einen Wald ausgeschlossen werden.

Ferner ist es bekannt, die Fahrtgastzelle - auch bei Umluftbetrieb - zeitweilig automatisch mit Luft zu "durchspülen". Gemäß einer bekannten Ausführungsform wird bei einem Umluftbetrieb nach bestimmten Zeiträumen ein kurzer Außenluftbetrieb durchgeführt. Wird nun das Durchfahren eines Tunnels oder einer Tiefgarage erkannt, so kann diese Durchspülung unterbunden und damit das Einbringen von Schadstoffen in das Fahrzeug vermieden werden. Natürlich ist es auch möglich, weitere Parameter, wie die Fahrzeuggeschwindigkeit, für die Steuerung von Außenluft- und Umluftbetrieb zu verwenden.

Insgesamt stellt die vorliegende Erfindung eine einfache Möglichkeit dar, Schadstoffbeeinträchtigungen, beispielsweise bei Tunnel- oder Tiefgaragenfahrten zu vermeiden. Da oft Helligkeits- und möglicherweise auch Solarsensoren in Fahrzeugen bereits vorhanden sind, bedarf es lediglich der Auswertung dieser Signale mit einem entsprechenden Algorithmus.

## Patentansprüche

1. Verfahren zur Umlufteinstellung bei einer Klimaanlage in einem Fahrzeug, bei der von einem Außenluftbetrieb auf einen Umluftbetrieb und umgekehrt umgeschaltet werden kann,
**dadurch gekennzeichnet,**
- **dass** eine Änderung der Helligkeit und/oder der Sonneneinstrahlung festgestellt wird,
- **dass** aufgrund der Helligkeitsänderung und/oder der Änderung der Sonneneinstrahlung von einem Außenluftbetrieb auf einen Umluftbetrieb oder umgekehrt umgeschaltet wird,
- **dass** ein Maß für die Änderung der Helligkeit und/oder der Sonneneinstrahlung ermittelt wird, dass geprüft wird, ob dieses Maß einen vorgegebenen Wert überschreitet und dass bei Überschreitung des Wertes eine Umschaltung zwischen Außenluftbetrieb und Umluftbetrieb erfolgt.

2. Verfahren nach Anspruch 1,
**dadurch gekennzeichnet,**
**dass** von einem Außenluftbetrieb auf einen Umluftbetrieb umgeschaltet wird, wenn sich die Helligkeit und/oder die Sonneneinstrahlung stark vermindert und die Klimaanlage mit Außenluft betrieben wird.

3. Verfahren nach einem der Ansprüche 1 bis 2,
**dadurch gekennzeichnet,**
**dass** von Umluftbetrieb auf Außenluftbetrieb umgeschaltet wird, wenn vorher aufgrund einer Helligkeits- und/oder Sonneneinstrahlungsänderung auf den Umluftbetrieb umgeschaltet worden ist und die Helligkeit und/oder die Sonneneinstrahlung wieder stark zunehmen.

4. Verfahren nach einem der vorhergehenden Ansprüche,
**dadurch gekennzeichnet,**
**dass** eine Schadstoffkonzentration ermittelt wird und dass von Umluftbetrieb auf Außenluftbetrieb umgeschaltet wird, wenn vorher aufgrund einer Helligkeits- oder Sonneneinstrahlungsänderung auf den Umluftbetrieb umgeschaltet worden ist und die Schadstoffkonzentration über einen bestimmten Zeitraum nicht zunimmt.

5. Verfahren nach einem der vorhergehenden Ansprüche,
**dadurch gekennzeichnet,**
**dass** eine Durchspülung mit Außenluft bei einem Umluftbetrieb dann unterbunden wird, wenn aufgrund der Helligkeitsänderung und/oder der Änderung der Sonneneinstrahlung von einem Außenluftbetrieb auf einen Umluftbetrieb umgeschaltet worden ist.

## Claims

1. A method of adjusting the air circulation in a vehicle air-conditioning system, wherein a change-over can be made between outside-air operation and circulating-air operation and vice versa, **characterised in that**
- a change in the brightness and/or the insolation is detected,
- as a result of the change in brightness and/or the change in insolation, a switch-over is made from outside-air operation to circulating-air operation or vice versa, and
- a measurement of the change in brightness and/or insolation is made, a check is made whether the measurement exceeds a set value, and if the value is exceeded, a change-over from outside-air operation to circulating-air operation is made.

2. A method according to claim 1, **characterised in that** a change-over from outside-air operation to circulating-air operation is made if the brightness and/or the insolation increases greatly and the air-conditioning system is operating with outside air.

3. A method according to claim 1 or 2, **characterised in that** a change-over from circulating-air operation to outside-air operation is made if a change to circulating-air operation has previously been made as a result of a change in brightness and/or insolation and if the brightness and/or insolation then increases greatly.

4. A method according to any of the preceding claims, **characterised in that** a concentration of pollutants is determined and a change-over from circulating-air operation to outside-air operation is made if a change-over to circulating-air operation has previously been made owing to a change in brightness and/or insolation and if the concentration of pollutants does not increase during a certain time.

5. A method according to any of the preceding claims, **characterised in that** flushing with outside air during circulating-air operation is interrupted if a change-over from outside-air operation to circulating-air operation has been made as a result of the change in brightness and/or insolation.

## Revendications

1. Procédé de réglage de la circulation d'air pour un conditionneur d'air dans un véhicule, dans lequel on peut commuter d'un mode d'air extérieur en un mode circulation d'air interne et inversement,
**caractérisé en ce qu'**
- une variation de la luminosité et/ou de l'incidence solaire est constatée,
- **qu'**en raison de la variation de la luminosité et/ou de l'incidence solaire, une commutation est effectuée d'un mode d'air extérieur en un mode de circulation d'air interne ou inversement,
- qu'une valeur pour la variation de la luminosité et/ou de l'incidence solaire est déterminée, qu'il est vérifié si cette valeur dépasse une valeur prédéfinie et en cas de dépassement de la valeur une commutation entre le mode d'air extérieur et le mode de circulation d'air interne est effectuée.

2. Procédé selon la revendication 1,
**caractérisé en ce qu'**
une commutation d'un mode d'air extérieur en un mode de circulation d'air est effectuée lorsque la luminosité et/ou l'incidence solaire est fortement diminuée et le conditionneur d'air fonctionne avec l'air extérieur.

3. Procédé selon l'une quelconque des revendications 1 à 2,
**caractérisé en ce qu'**
une commutation du mode de circulation d'air interne en mode d'air extérieur est effectuée si préalablement une commutation en mode de circulation d'air interne a eu lieu en raison d'une variation de la luminosité et/ou de l'incidence solaire et la luminosité et/ou l'incidence solaire sont à nouveau fortement croissantes.

4. Procédé selon l'une quelconque des revendications précédentes,
**caractérisé en ce qu'**
une concentration de polluants est déterminée et une commutation du mode circulation d'air interne en mode d'air extérieur est effectuée si préalablement une commutation en mode circulation d'air interne a eu lieu en raison d'une variation de la luminosité ou de l'incidence solaire et la concentration de polluants n'augmente pas pendant une période de temps déterminée.

5. Procédé selon l'une quelconque des revendications précédentes,
**caractérisé en ce qu'**
un rinçage avec de l'air extérieur pendant un mode circulation d'air interne est interrompu si, en raison de la variation de la luminosité et/ou de l'incidence solaire, une commutation d'un mode air extérieur en un mode circulation d'air interne a eu lieu.
